# DEMANDE DE BREVET EUROPEEN

(11) **EP 1 529 618 A1**
(43) Date de publication de la demande: **11.05.2005**
(21) Numéro de dépôt: 04292571.9
(22) Date de dépôt: 29.10.2004
(51) Int. Cl.: B29C 44/12

(54) **Procédé pour la production de structure de couchage**

(30) Priorité: 04.11.2003 FR 0312909
(71) Demandeur: Oniris, 78520 Limay (FR)
(72) Inventeur: Broutin, Frank, 78540 Vernouillet (FR); Michel, Denis, 78200 Mantes-La-Jolie (FR)
(74) Mandataire: Intès, Didier Gérard André

(57) **Abrégé**

L'invention concerne un procédé pour réaliser un couchage comportant un cadre (2) susceptible d'être équipé de pieds, un sommier (3) de type métallique ou à lattes supporté par le cadre et un matelas (4) en mousse destiné à reposer sur le sommier, par le fait que :
a) on dispose d'un moule (1) constitué d'une cuve (5) et d'un couvercle (6) et dont la cavité interne (7) est susceptible de contenir l'ensemble (21) constitué du cadre (2), du sommier (3) et du matelas (4),
b) on place le cadre (2) dans le fond de la cuve (5),
c) on place le sommier (3) sur le cadre (2),
d) on coule de la mousse (20) à l'état liquide dans la cuve (5),
e) on place le couvercle (6) sur la cuve,
f) on procède à la polymérisation ou à la vulcanisation de la mousse (20) par chauffage,
g) on démoule l'ensemble (21), et
h) on recouvre l'ensemble (21) avec un coutil (22) dont les bords (23) sont fixés sous le cadre (2).

## Description

L'invention concerne un procédé pour réaliser un couchage comportant un cadre susceptible d'être équipé d'un pied, un sommier de type métallique ou à lattes supporté par le cadre et un matelas en mousse destiné à reposer sur le sommier.

En général, ce type de couchage comporte deux éléments distincts à savoir un ensemble constitué du cadre et du sommier, et un matelas. Ce matelas en mousse est recouvert sur ses deux faces d'un coutil.

Pour éviter que le matelas soit bien positionné sur le sommier, on peut fixer ces deux éléments enter eux en atelier, au moyen de bandes Velcro, ou d'autres dispositifs de collage. Ceci augmente évidement les nombres d'opérations nécessaires pour réaliser un couchage en une seule pièce et le coût de ce couchage.

Le but de l'invention est de proposer un procédé de fabrication économique d'un couchage en une seule pièce.

L'invention atteint son but par le fait que :
a) on dispose d'un moule constitué d'une cuve et d'un couvercle et dont la cavité interne est susceptible de contenir l'ensemble constitué du cadre, du sommier et du matelas,
b) on place le cadre dans le fond de la cuve,
c) on place le sommier sur le cadre,
d) on coule de la mousse à l'état liquide dans la cuve,
e) on place le couvercle sur la cuve,
f) on procède à la polymérisation ou à la vulcanisation de la mousse par chauffage,
g) on démoule l'ensemble, et
h) on recouvre l'ensemble avec un outil dont les bords sont fixés sous le cadre.

Avantageusement, le sommier est écarté du fond du moule grâce à cette disposition, après l'opération de moulage, le sommier est encastré dans la mousse.

Le fond de la cuve présente près de ses flancs des rainures pour recevoir la partie inférieure du cadre. Ainsi, après le démoulage, la face inférieure du cadre est à l'air libre et apte à recevoir les moyens de fixation du coutil et les pieds.

Le sommier peut être une grille réalisée à partir de tiges en fibres de verre noyées dans une résine, ou comporter des lattes transversales.

D'autres avantages et caractéristiques de l'invention ressortiront à la lecture de la description suivante faite à titre d'exemple ou en référence aux dessins annexés dans lesquels :
la figure 1 est une coupe transversale ou longitudinale, selon un plan vertical, d'un moule utilisé pour mettre en oeuvre l'invention ;
la figure 2 est une vue de dessus d'un coin de la cuve de ce moule ;
la figure 3 et une coupe verticale de la coupe renfermant un cadre ;
la figure 4 est une vue de dessus de la cuve contenant le cadre ;
la figure 5 est une coupe verticale de la cuve après la pose du sommier dans le cadre ;
la figure 6 est une vue de dessus de la cuve contenant le cadre et le sommier ;
la figure 7 est une coupe verticale de la cuve contenant le cadre et le sommier après remplissage par de la mousse liquide et avant la pose du couvercle ;
la figure 8 est une coupe verticale du moule fermé prêt à la polymérisation ou à la vulcanisation de la mousse ;
la figure 9 est une coupe transversale du couchage après démontage ;
la figure 10 montre le couchage de la figure 9 après la pose du coutil ; et
la figure 11 montre le couchage après la fixation des pieds sous le cadre.

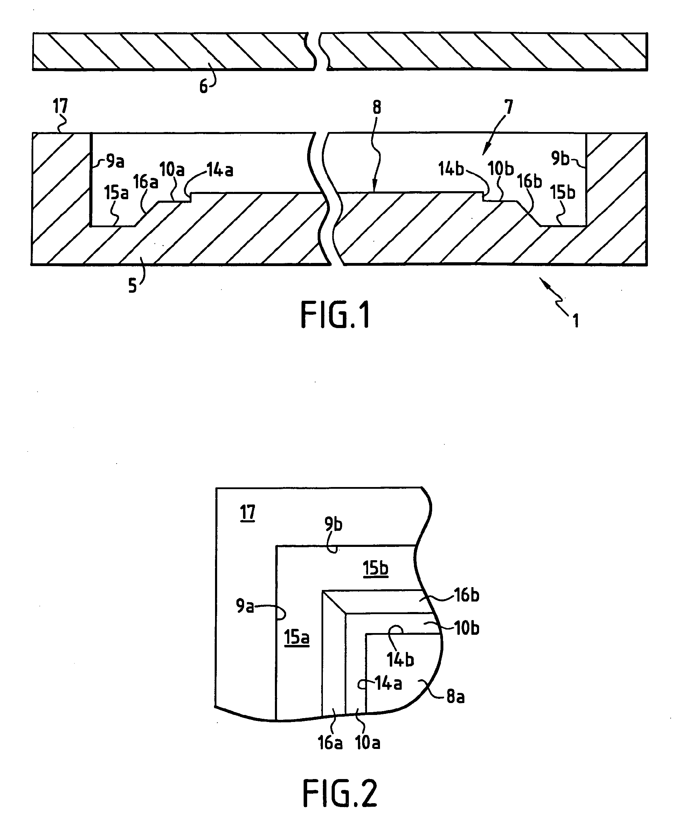

La figure 1 montre un moule 1 utilisé pour réaliser un couchage comportant un cadre 2, un sommier 3 du type grille métallique ou à lattes, et un matelas 4 en mousse, dans lequel l'ensemble constitué par le cadre 2 et le sommier 3 sont solidarisés au matelas 4 lors de la polymérisation ou de la revendication de la mousse.

Le moule 1 est constitué de deux parties : une cuve 5 et un couvercle amovible 6.

Lorsque le couvercle 6 est fixé sur la cuve 5, le moule 1 définit une cavité interne 7 dont les dimensions sont adaptées pour accueillir le cadre 2, le sommier 3 et le matelas 4. La paroi du fond 8 de la cuve 5 présente à sa périphérie, près de ses flancs latéraux et transversaux verticaux et parallèles entre eux 9a et 9b, des rainures 10a et 10b destinés à accueillir les parties inférieures 11a et 11b des longueurs 12a, 12b et des traverses 13a et 13b du cadre 2.

Dans l'exemple montré sur les figures 1 et 2, la partie centrale plane 8a du fond 8 est surélevée, cette portion centrale 8a est reliée aux fonds des rainures 10a et 10b, qui sont plans, par des parois verticales 14a et 14b dont la hauteur est inférieure à l'épaisseur du cadre 2. Les fonds des rainures 10a et 10b sont reliés aux flancs verticaux 9a et 9b adjacents, par des surfaces périphériques planes 15a, 15b, et des surfaces inclinées 16a et 16b convergents au-dessus de la cuve 5. La géométrie du fond de la cuve 5 autour des rainures 10a et 10b peut évidemment être différente et sont adapté à la géométrie du pourtour inférieur du matelas 4 que l'on veut réaliser.

La hauteur des flancs 9a et 9b est adaptée selon l'épaisseur du matelas 4 à réaliser.

La face inférieure du couvercle 6 peut être plane, mais elle peut également présenter des creux et des bosses, selon le dessin souhaité de la face supérieure du matelas 4. Ce qui compte, c'est que le pourtour du couvercle 6 s'adapte parfaitement sur la face supérieure 17 de la cuve 5, lors de l'opération de polymérisation ou de vulcanisation de la mousse par chauffage.

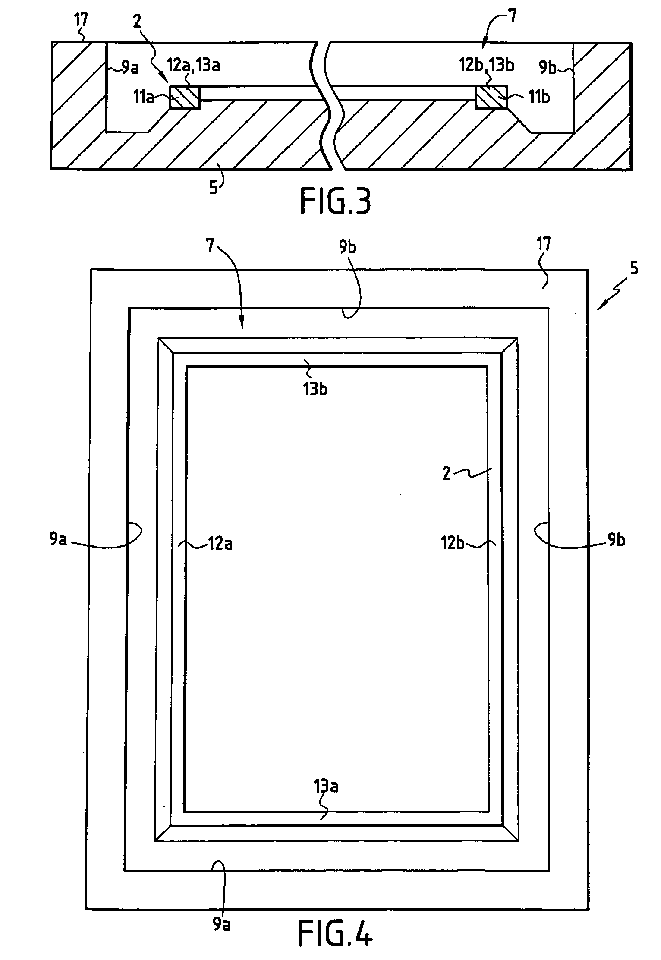

Les figures 3 à 8 montrent la cuve 5 lors des différentes phases du procédé selon l'invention.

La cuve 5 étant vide et le couvercle 6 étant ôté, on dispose dans le fond de la cuve 5, le cadre 2, ainsi que cela est montré sur les figures 3 et 4, de telle manière que les parties inférieures 11a et 11 des longueurs 12a et 12b et des traverses 13a et 13b de ce cadre 2 soient disposées dans les rainures 10a et 10b.

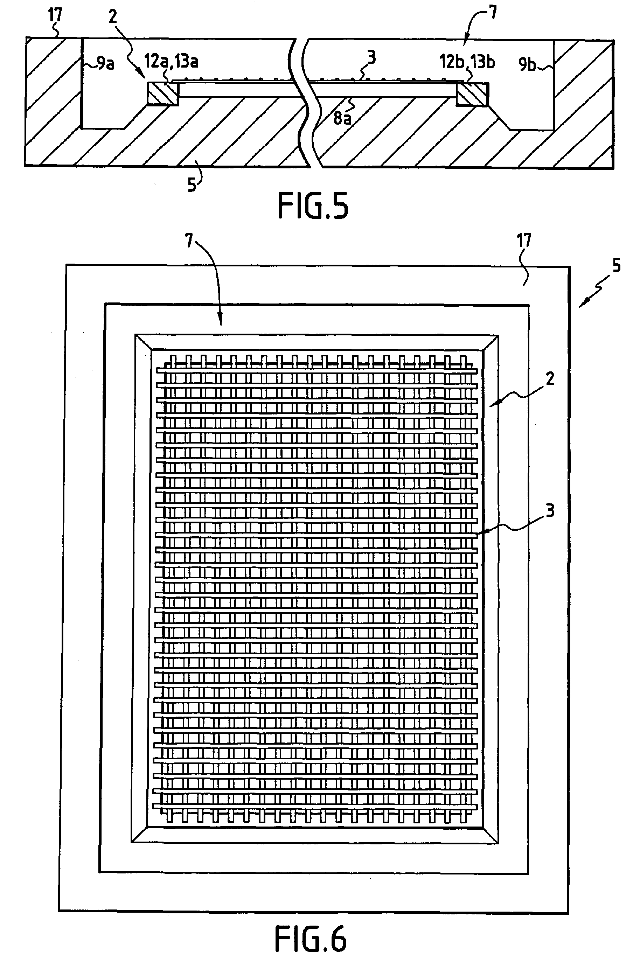

On dispose ensuite, voir les figures 5 et 6, le sommier 3 sur le cadre 2. Ce sommier 3 peut se présenter sous la forme d'une grille métallique, ou d'une grille constituée de tiges composites, en fibres de verre par exemple, noyé dans une résine appropriée dont la température de ramollissement est supérieure à la température de vulcanisation ou de polymérisation de la mousse constituant le matelas 4. Le sommier 3 peut être solidarisé au cadre 2 avant l'introduction de ce dernier dans la cuve 5, dans ce cas, on s'arrange pour que le sommier 3 soit disposé au-dessus de la partie centrale 8a du fond de cuve 8.

Le sommier 3 peut être également réalisé sous la forme de lattes transversales reliant les longueurs 12a et 12b du cadre 2 et dont les extrémités sont supportées par ce dernier par des moyens connus. Dans ce cas, il est plus pratique de monter les lattes sur le cadre 2 avant d'introduire ce dernier dans la cuve 5.

L'opération suivante consiste à remplir la cavité 7 de la cuve 5 d'une mousse 20 à l'état liquide. Ce peut être indifféremment une mousse à base du polyuréthanne ou une mousse de type latex. Du fait que la mousse est à l'état liquide, le sommier 3 est immergé dans cette dernière, et les parois du cadre 2 qui ne sont pas en appui sur la paroi du fond du moule, sont en contact avec la mousse liquide.

Lorsqu'on a rempli la cuve 7 avec la dose de mousse nécessaire, on met en place le couvercle 6 sur la cuve 5, et on le fixe sur cette cuve par des moyens de fixation appropriés.

Il ne reste plus qu'à introduire le moule 1 dans un four pour procéder à la polymérisation de la mousse 20, si elle est du type polyuréthanne, ou à sa vulcanisation si elle est du type latex.

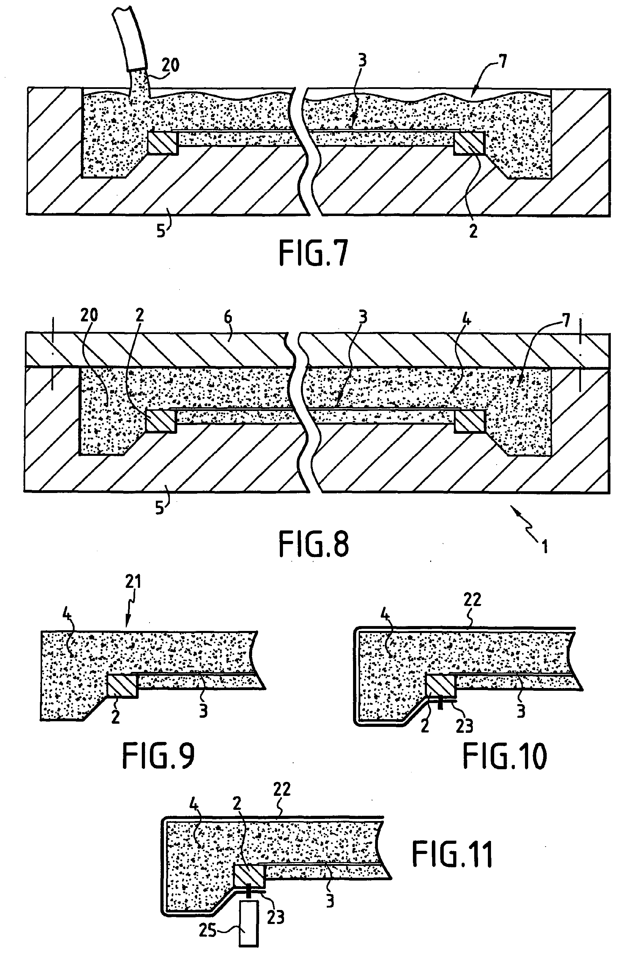

La figure 8 montre le moule 1 après la mise en place des couvercles 6 sur la cuve 5, et avant l'opération de démoulage.

Il ne reste plus qu'à démouler le moule 1, après refroidissement et à ressortir l'ensemble 21 montré sur la figure 9 et à habiller cet ensemble.

L'ensemble 21 se présente sous la forme d'une pièce monobloc constituée du cadre 2 du sommier 3, et du matelas 4, cet ensemble 21 ayant la forme de la cavité interne 7 du moule 1. Le sommier 3 est noyé dans la mousse du matelas 4.

L'opération suivante consiste à recouvrir le matelas 4 avec un coutil 22, ainsi que cela est montré sur la figure 10. Les bords 23 du coutil 22 sont fixés sur la face inférieure 24 du cadre 2 par tout moyen approprié, et notamment par agrafage. Le cadre 2 comporte évidemment des moyens pour réaliser cette fixation.

Le cadre 2 comporte en outre dans ses quatre coins des moyens pour permettre la fixation, à demeure ou de manière amovible, de pieds de lit 25, ainsi que cela est représenté sur la figure 11.

## Revendications

1. Procédé pour réaliser un couchage comportant un cadre (2) susceptible d'être équipé de pieds, un sommier (3) de type métallique ou à lattes supporté par le cadre et un matelas (4) en mousse destiné à reposer sur le sommier,
**caractérisé par le fait que** :
a) on dispose d'un moule (1) constitué d'une cuve (5) et d'un couvercle (6) et dont la cavité interne (7) est susceptible de contenir l'ensemble (21) constitué du cadre (2), du sommier (3) et du matelas (4),
b) on place le cadre (2) dans le fond de la cuve (5),
c) on place le sommier (3) sur le cadre (2),
d) on coule de la mousse (20) à l'état liquide dans la cuve (5),
e) on place le couvercle (6) sur la cuve,
f) on procède à la polymérisation ou à la vulcanisation de la mousse (20) par chauffage,
g) on démoule l'ensemble (21), et
h) on recouvre l'ensemble (21) avec un coutil (22) dont les bords (23) sont fixés sous le cadre (2).

2. Procédé selon la revendication 1, **caractérisé par le fait que** le sommier (3) est écarté du fond (8) de la cuve (5).

3. Procédé selon l'une des revendications 1 ou 2, **caractérisé par le fait que** le sommier (3) est une grille réalisée à partir de tiges en fibres de verre noyées dans de la résine.

4. Procédé selon l'une des revendications 1 ou 2, **caractérisé par le fait que** le sommier (3) comporte des lattes transversales.

5. Procédé selon l'une des revendications 1 à 4, **caractérisé par le fait que** le fond (8) de la cuve (5) présente près de ses flancs verticaux (9a, 9b) une rainure (10a, 10b) pour recevoir la partie inférieure (11a, 11b) du cadre (2).
